(19) Europäisches Patentamt
European Patent Office
Office européen des brevets

(11) **EP 3 402 990 B1**

(12) **EUROPEAN PATENT SPECIFICATION**

(45) Date of publication and mention
of the grant of the patent:
**07.06.2023 Bulletin 2023/23**

(21) Application number: **17700540.2**

(22) Date of filing: **17.01.2017**

(51) International Patent Classification (IPC):
**G21C 15/247** (2006.01)     **F04D 3/00** (2006.01)
**F04D 7/06** (2006.01)     **F04D 29/52** (2006.01)

(52) Cooperative Patent Classification (CPC):
**F04D 3/005; F04D 7/065; F04D 29/181;
F04D 29/528; G21C 15/247;** F05D 2250/51;
Y02E 30/30

(86) International application number:
**PCT/EP2017/050910**

(87) International publication number:
**WO 2017/121907 (20.07.2017 Gazette 2017/29)**

(54) **PUMP FOR NUCLEAR APPLICATIONS**

**PUMPE FÜR NUKLEARE ANWENDUNGEN**

**POMPE POUR APPLICATIONS NUCLÉAIRES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.01.2016 GB 201600836**

(43) Date of publication of application:
**21.11.2018 Bulletin 2018/47**

(73) Proprietors:
• **SCK CEN
1160 Brussels (BE)**
• **von Karman Institute for Fluid Dynamics
1640 Sint-Genesius-Rode (BE)**

(72) Inventors:
• **VERSTRAETE, Tom
1500 Halle (BE)**
• **ARTS, Tony
1390 Grez Doiceau (BE)**
• **FERNANDEZ, Rafaël
2660 Hoboken (BE)**
• **SCHYNS, Marc
4690 Roclenge/Geer (BE)**

(74) Representative: **DenK iP bv
Leuvensesteenweg 203
3190 Boortmeerbeek (BE)**

(56) References cited:
**EP-A1- 3 223 285     EP-A2- 1 103 724
DE-B- 1 033 032     GB-A- 268 037
GB-A- 1 224 320     GB-A- 2 044 853
JP-A- H07 127 593     US-A- 2 990 779**

EP 3 402 990 B1

## Description

Field of the invention

The invention relates to the field of axial pumps for pumping of liquid metal.

## Background of the invention

Nuclear reactors, due to the radioactive nature of their fuel, need special care and requirements for maintenance. Ideally, there should be no risks of radiation leakage, hence all parts in contact with the elements of the reactor must avoid any transfer of matter to the exterior (such as transfer to secondary coolants and/or the environment), while at the same time maximizing heat transfer. Hence, a careful selection of a proper coolant is fundamental. A useful coolant of nuclear reactors are liquid metals and alloys.

An example of liquid metal cooled reactors are Generation IV fast reactors featuring a fast neutron spectrum, making them advantageous for nuclear applications (such as for generation of nuclear power but not limited thereto). One example of such a system is the MYRRHA reactor (for Multi-purpose hYbrid Research Reactor for High-tech Applications). The MYRRHA reactor will be a 'Lead-cooled fast reactor' with two possible configurations: sub-critical or critical.

An example of liquid metal coolants that can be used are lead or lead-bismuth eutectic mixture (LBE). These types of metals are desirable as coolants because of their relatively low melting temperature. Moreover, they can absorb radiation with lower risk than other substances, and they can solidify fast in case of reactor breaching, reducing radiation leakage.

The coolant normally circulates in a closed loop and in order to obtain a good pressure of the coolant and circulate the coolant, powerful pumps are required. Furthermore, lead-bismuth eutectic mixture (LBE) has the disadvantage of being aggressive. Pumps therefore suffer a great deal of erosion. Since maintenance typically may require disassembly of part or all of the cooling circuit and therefore results in non-operation of the reactor, it is desirable to limit the wear of the pumps. US2,990,779, JP7-127593 and GB268037 describe high speed propeller pumps. EP 1 103 724 A2 and EP 3 223 285 A1 disclose axial pumps for pumping liquid metals.

## Summary of the invention

It is an object of embodiments of the present invention to provide a powerful and robust pump for liquid metal, suitable for nuclear power applications and requiring as little maintenance as possible.

The above object is obtained by a device and system according to embodiments of the present invention.

The present invention relates to an axial pump for pumping liquid metal, the axial pump comprising an inlet for receiving liquid, at least one rotor, the rotor comprising a rotor hub and a plurality of rotor blades positioned thereon, a stator, comprising a stator hub and a plurality of stator vanes, and an outlet for discharging the liquid metal, wherein the inlet is defined by two axially concentric walls, the concentric walls having curved edges such that the inlet walls define an inlet entrance area which normal vector is substantially perpendicular to the axis of the axial pump.

The rotor blades have a tip being positioned closest to the wall opposing the rotor and the ratio of the distance between the rotor axis and the rotor hub, being the rotor hub radius, to the distance between the rotor axis and the rotor blade tip, being the rotor tip radius, is larger than 0.87.

It was surprisingly found that an axial pump allows sufficient efficiency for accurately pumping liquid metal such as lead-bismuth eutectic mixtures while limiting or preventing erosion. It is an advantage of embodiments of the present invention that the required head can be delivered by the pump, although the maximum velocity can be limited, thus reducing the erosion risk of the pump.

It furthermore is an advantage of embodiments of the present invention that the construction and manufacturing of the pump is easier than for radial pumps.

It is an advantage of embodiments of the present invention that a good efficiency can be obtained at operation point. The efficiency may be above 80%, advantageously above 85%, even more advantageously over 87%.

It is an advantage of embodiments of the present invention that the maximum relative velocity of the liquid is below 12 m/s, assisting in the limitation and/or prevention of corrosion of the pump.

It is an advantage of embodiments of the present invention that a large hub to tip diameter ratio is applied assisting in the limitation and/or prevention of corrosion of the pump.

It is an advantage of embodiments of the present invention that a smooth flow path is obtained, reducing accumulation of stresses in the hub.

The axial pump may be adapted for pumping lead-bismuth eutectic mixtures.

In some embodiments, the inlet area of the pump may be 8.5 to 10.8 times larger than the area in front of the rotor.

It is an advantage of embodiments of the present invention that there is a smooth transition of the flow of liquid from the entrance area to the rotor.

The longitudinal section of the walls may comprise a monotonically decreasing curvature from the entrance of the inlet, the curvature being defined with respect to the axis of the pump.

It is an advantage of embodiments of the present invention that the curvature may gradually reduce, resulting in a smooth flow towards the rotor, further avoiding corners and depletion zones, thereby reducing cavitation in the inlet.

The length of the portion of the inlet before the rotor may have a radius of curvature larger than 0.5 meters and is at least 1 meter long.

It is an advantage of embodiments of the present invention that the area reduction between inlet and outlet guarantees a uniform inlet velocity in front of the rotor and is obtained by first a rapid reduction, e.g. in the first 0.25m to 0.4m, of the inlet, where the hub reaches a radius of 0.1 to 0.05m under the hub surface of the rotor. This is followed by a second part with a gradual increase of the hub radius until it reaches the hub radius of the rotor.

It is an advantage of embodiments of the present invention that they provide a smooth acceleration of the flow towards the rotor. It is an advantage of embodiments of the present invention that flow can be substantially uniform in velocity at the rotor inlet. It is an advantage of embodiments of the present invention that the speed of liquid can be regular and smooth in the rotor.

The rotor blades may have a tip being positioned closest to the wall opposing the rotor and whereby the ratio of the distance between the rotor axis and the rotor hub, being the rotor hub radius, to the distance between the rotor axis and the rotor blade tip, being the rotor tip radius, is larger than 0.9, e.g. larger than 0.95.

It is an advantage of embodiments of the present invention that the large ratio of the rotor hub radius to the rotor tip radius assists in having a limited maximum velocity thus limiting or avoiding wear, while still allowing sufficient efficiency.

It is an advantage of embodiments of the present invention that the speed of the liquid is maximum in the rotor area, increasing maximum speed at which cavitation may be avoided, and increasing the head rise.

The rotor may comprise at least 20 blades, advantageously at least 23 blades.

The rotor blades may comprise stainless steel. It is an advantage of embodiments of the present invention that the rotor may present stiffness and erosion resistance using readily available materials.

The rotor blades may have a varying angle with respect to the axis of the pump, for different positions along a blade camber line of the rotor blade.

The variation in the angle with respect to the axis of the pump may be different for camber lines near the tip of the rotor blade compared to camber lines near the hub.

The maximum rotor blade thickness may be 0.011 meter at the hub and 0.01 meter in the tip. The thickness may be maximal at about 40% of the chord. The rotor blade thickness may be chosen larger and embodiments are not limited to the above restrictions.

It is an advantage of embodiments of the present invention that the maximum flow velocity along the blade is reduced, reducing blade erosion and pitting, and reducing stress in the blade's suction side.

A cross section of the rotor blades may be defined by intersecting double circular arcs. A cross section of the rotor blades may be defined by intersecting asymmetric double circular arcs.

The outlet may further comprise a diffuser, the diffuser having a length 0.55 to 0.65 meter. The area ratio between outlet and inlet can be in the range of 1.3 to 2.2.

The stator may comprise at least one row of vanes. It is an advantage of embodiments of the present invention that the whirl component of the liquid may be reduced, thereby further increasing the pressure.

The vanes may comprise a varying angle with respect to the axis of the pump along the vane camber line.

The at least one row of vanes may comprise at least 25 axial vanes.

The vane thickness may be between 0.01 and 0.022 meter.

The present invention also relates to a nuclear reactor cooled using a liquid metal coolant for cooling, the cooling system comprising an axial pump for pumping the liquid metal coolant as described above.

The present invention also relates to the use of an axial pump as described above for pumping lead-bismuth eutectic mixtures for cooling of a nuclear reactor.

Particular and preferred aspects of the invention are set out in the accompanying independent and dependent claims.

These and other aspects of the invention will be apparent from and elucidated with reference to the embodiment(s) described hereinafter.

**Brief description of the drawings**

FIG. 1 illustrates a pump according to some embodiments of the present invention comprising a hub and a shroud.

FIG. 2 illustrates a cross section of a pump according to some embodiments of the present invention.

FIG. 3 illustrates the inlet of a pump and its cross section, according to some embodiments of the present invention.

FIG. 4 illustrates a foil for a pump according to some embodiments of the present invention

FIG. 5 shows the change of camber line angle of a blade with respect to the axis of a pump according to some embodiments of the present invention.

FIG. 6 shows the thickness profile of a blade for a pump according to some embodiments of the present invention.

FIG. 7 shows the design choice of flow angles, for a given flow, related to the entry flow/exit flow ratio in a blade.

FIG. 8 illustrates the outlet of a pump and its cross section, according to some embodiments of the present invention.

FIG. 9 shows the outline of the cross section of an inlet as the radius of the walls as a function of the axis length, according to a particular embodiment of the present invention.

FIG. 10 shows the maximum (relative) flow along the camber line of a blade for given conditions of an embodiment of the present invention.

FIG. 11 shows the maximum (relative) flow along the camber line of a blade for given conditions of another embodiment of the present invention.

FIG. 12 shows the maximum flow along the camber line of a vane, as well as its flow angle variation, for given conditions of an embodiment of the present invention.

FIG. 13 shows the efficiency and total head rise as a function of the nominal flow rate, for six different speed regimes.

FIG. 14 shows the net positive suction head required and torque as a function of the nominal flow rate, for six different speed regimes.

FIG. 15 shows the total head rise as a function of the hydraulic efficiency, as well as the maximum (relative) flow as a function of hydraulic efficiency and a representative example of increase of maximum flow in the camber line of a blade with increase of efficiency.

FIG. 16 shows the total head loss of a pump at zero RPM (static rotor) as a function of nominal flow rate, for direct and inverse flow directions.

FIG. 17 shows the torque and total head as a function of nominal flow rate, for several speed regimes, for calculation of shutdown time (parabolic throttle line).

The drawings are only schematic and are non-limiting. In the drawings, the size of some of the elements may be exaggerated and not drawn on scale for illustrative purposes. Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The description of certain embodiments of the present invention will make reference to different parts of pumps. Some of these parts may not be present in all embodiments of the present invention. Pumps according to embodiments of the present invention comprise an "inlet", which comprise walls such as an outer wall in a "shroud" and an inner wall, and an entrance defined by edges. In some embodiments of the present invention, the inner wall may define a hub supporting the rotor and stator. The inlet walls may serve to direct the pumped liquid towards a rotor and stator. Some embodiments of the present invention make reference to an "outlet", which may comprise a diffusor. The outlet may direct the pumped liquid to the exit of the pump, such exit may be defined also by the shroud wall, or by the shroud and the hub wall.

Where in embodiments of the present invention reference is made to "blade" and "vane", reference is made to a foil or plate, usually a metal or ceramic foil or plate, shaped and distributed for a particular function in the pump. A set of blades in a rotor may be known as a "flow through cascade" and a set of vanes in a stator may be known a "ring vane".

Where in embodiments of the present invention reference is made to the "camber line" of a blade or vane, reference is made to the line formed by the points equidistant to the outer surfaces of the blade or vane, when viewing a cross-section of the blade or the vane.

Where in embodiments of the present invention reference is made to "hub radius", or $R_{HUB}$, reference is made to the distance between the axis of the pump and the hub wall. For example, the "rotor hub radius" (or $R_{HUB}$) is the part of rotor blade closest (e.g. attached) to the hub. On the other hand, "foil tip radius" or $R_{TIP}$ refers to the distance between the axis of the pump and the part of the rotor most far away from the axis of the pump, assuming the rotor is positioned on the inner wall of the pump. Depending of the type of blade, there shall be references to the blade (hub or tip) radius, $R_{BHUB}$ and $R_{BTIP}$ as well as vane (hub or tip) radius, $R_{VHUB}$ and $R_{VTIP}$. The difference $R_{TIP}$ - $R_{HUB}$ determines the height of the blade or vane, which in particular embodiments of the present invention may be close to the distance between the hub and the shroud at that region of the rotor.

In a first aspect, the present invention relates to an axial pump for pumping liquid, specifically to an axial pump suitable for pumping liquid metal, such as for example a lead alloy such as liquid bismuth eutectic (LBE) mixture. LBE melts at around 125°C, hence it is a very suitable liquid metal coolant for nuclear reactors.

According to the present invention, the axial pump comprises an inlet for receiving liquid, at least one rotor, a stator, and an outlet for discharging the liquid. The rotor comprises a rotor hub and a plurality of rotor blades positioned thereon. The stator comprises a stator hub and a plurality of stator vanes. According to the present invention the inlet is defined by two axially concentric walls, the concentric walls having curved edges such that the inlet walls define an inlet entrance area which normal vector is substantially perpendicular to the axis of the axial pump.

One or both of the walls may have substantially cylindrical or conical parts (e.g. both walls having a circular cross-section). The walls may comprise at least a portion with a certain curvature and/or curved slope with respect of the pump axis. The walls may be bell-shaped walls, e.g. a cylinder or a cone with curved rims. The entrance of the inlet may be defined by curved rims of the outer surface and the inner surface walls, and the entrance may define an area (e.g. the lateral wall of a cylinder) whose .normal may be perpendicular to the axis of the pump. The flow may not be unidirectional, reducing stresses in the hub. In some embodiments of the present invention, the axial pump comprises an outer surface and an inner surface defining a hub defining part of the rotor and the stator. The outer surface and the inner surface may have axial symmetry and be concentric with respect to the pump axis. Hence, the inlet may be defined by the walls of the outer and inner surfaces, which are concentric with respect to the pump axis, allowing a symmetrical flow, which is advantageous for a smooth rotation and reduction of erosion risk.

According to the present invention, the rotor blades have a tip being positioned closest to the wall opposing the rotor and the ratio of the distance between the rotor axis and the rotor hub, being the rotor hub radius, to the distance between the rotor axis and the rotor blade tip, being the rotor tip radius, is larger than 0.87.

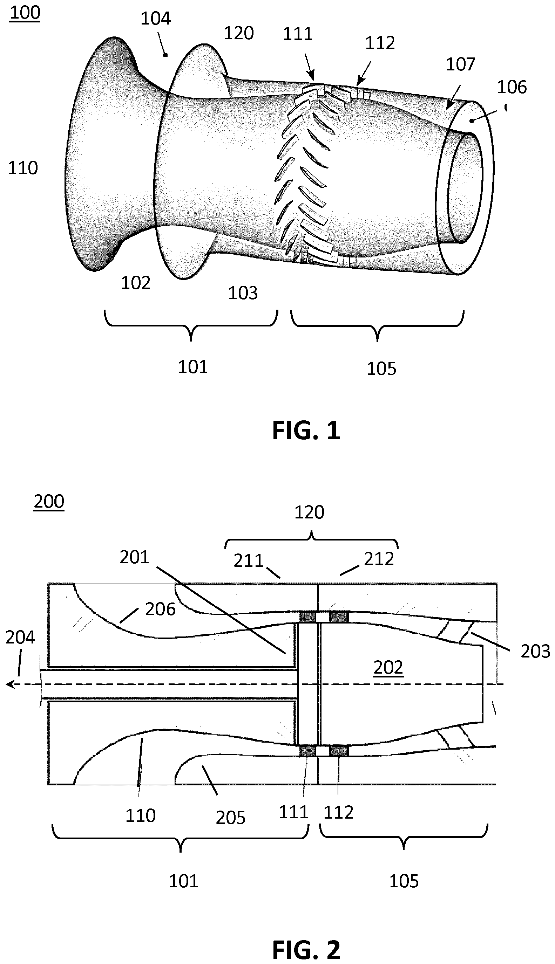

As shown in FIG. 1, an embodiment of the axial pump 100 may comprise an inlet 101 defined by an inner wall 102 defining a hub 110 and a wall 103 of an outer portion 120. Both walls are shown as bell-shaped (although the present invention is not limited thereto). The ensemble of both walls may define an inlet entrance area 104 for liquid metal to enter in the pump. The entrance may be defined by the curved edges of the walls. The inner wall 102 and the outer wall 103 of the pump may both have an edge, outwardly curved with respect to the axis. The entrance 104 may have the shape of the lateral area of a cylinder, advantageously allowing the flow to enter in the pump and producing an axially symmetrical flow. The present invention is not limited thereto and other shapes for the inlet entrance 104 may be also used, e.g. elliptic cylinder. The hub 110 may form the basis of a rotor which may comprise a flow-through cascade 111 formed by, for example, one ring of rotor blades. The hub 110 also may form a stator which may comprise one ring 112 of vanes. The present invention may not be limited thereto, and the rotor may comprise several rotor blade rings, and the stator may comprise several stator vane rings or even no vanes. The axial pump 100 may comprise an outlet 105 further comprising an exit area 106, for allowing discharge of pumped liquids. In some embodiments of the present invention, the outlet may comprise other structures and features, for example a diffuser 107.

Other elements and structural features may be present in the pump. For example, in FIG. 2 a scheme of the pump is represented comprising, as before, an inlet 101, a hub 110 forming a rotor 201 (comprising the flow-through cascade 111), and a stator 202 (which may comprise the vane ring 112). FIG. 2 further shows also the axis 204 of the axial pump, and also indicates the curvature of the surfaces at the edges : the curvature 205 of the outer surface edge and the curvature 206 of the inner surface edge.

The outer surface 120, also referred to as the shroud, may comprise two pieces: a first piece 211 forming part of the inlet 101 and a second piece 212 forming part of the outlet 105. Embodiments of the present invention are not limited thereto, and the outer surface may be one block. The inner surface forming the hub in particular embodiments of the present invention may comprise a rotatable beam 207 which may power the rotor, hence the flow through cascade 111 of rotor blades can be attached to the hub in these embodiments. Other alternative embodiments may comprise rotor blades attached to a rotor comprised in the outer surface.

The vane ring 112 may be attached to the stator in the hub, and be immobile. Some embodiments of the present invention may have the vane ring attached to the second piece 212 of the shroud 120.

Other features may be present, or some features may have more than one function. For example, in the particular embodiment represented in FIG. 2, one or more fins 203 may serve as structural support between the hub 110 and shroud 120. They may also serve as exit vanes for reducing whirl component of the liquid at the exit of the pump.

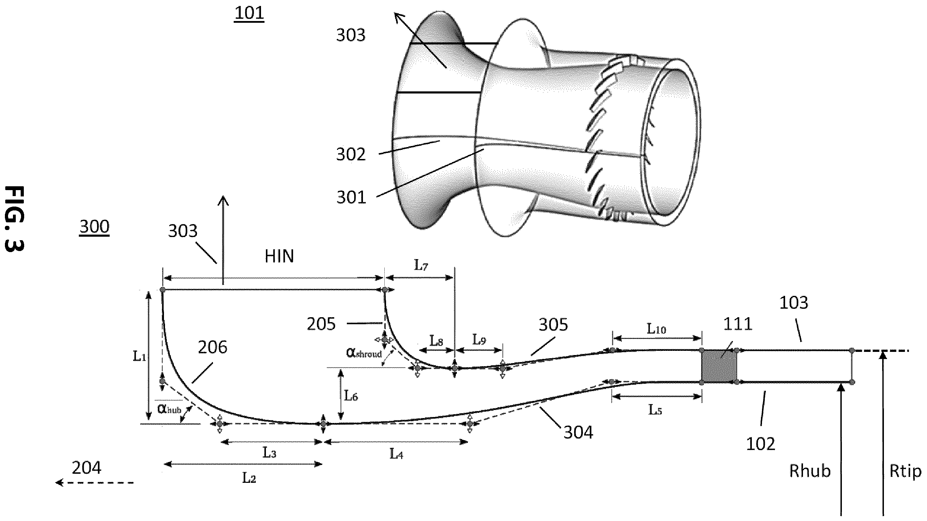

FIG. 3 represents an isolated inlet 101, as well as its cross section 300, of a pump according to some embodiments of the present invention. The cross section corresponds to the line 301 in the shroud wall 103 and the line 302 in the inner wall 102. In some embodiments of the present invention, the inlet entrance 104 is defined by the rim 205 of shroud wall 103 and the rim 206 of hub wall 102. The vector 303 normal to the entrance area may be perpendicular to the axis 204 of the pump. Several parameters are shown in the cross section 300, which can be optimized by design according to the desired flow, head rise, pressure, etc. while simultaneously reducing or avoiding erosion of the pump parts.

For example, with reference to the figure, the size of the entrance is given by $H_{IN}$. Its value may be chosen according to the distance between the hub and the shroud at the rotor region, its ratio to the hub radius between 0.88 and 1.14. This way, the pumping may be sufficiently efficient with no need for high speed of liquid at the entrance area. The length $L_1$ may have values between 0.50 and 0.63 times the hub radius RHUB, and the length $L_2$ between 0.63 and 1.0 times the hub radius RHUB. The curvature of the inner surface edge may be defined by the length $L_3$ and the angle $\alpha_{HUB}$ (alpha hub), which may have values between 0.38 and 0.44 times the hub radius RHUB and 25° to 35° respectively. The longitudinal section of the walls may also comprise a monotonically decreasing curvature 304 towards the flow through cascade 111 of the rotor, the curvature being defined with respect to the axis of the pump 204. It is an advantage of embodiments of the present invention that the flow (and liquid speed) may gradually increase towards the rotor, further avoiding corners, hence reducing erosion, reducing flow blockages or instabilities. Formation of erosion zones is also reduced, thereby reducing cavitation in the inlet. The curvature 304 in the hub wall 102 may be defined by the length $L_4$, and it may have values between 0.38 and 0.63 times the hub radius RHUB. The lengths $L_5$ and $L_{10}$ may be in between 0.25 and 0.45 time RHUB. These lengths define the part of the inlet closest to the rotor region, and in some embodiments may be a square toroid of height $L_5 = L_{10}$. The length $L_6$ may have the values of 0.25 to 0.30 times RHUB, and it may define the necking towards the rotor, which contributes in the increase of liquid pressure towards the rotor region. The length $L_7$ and Ls , together with the angle $\alpha_{SHROUD}$ may define the curvature of the shroud rim 205. The values may be between 0.38 to 0.63 times RHUB, 0.19 to 0.29 times RHUB and 20° to 30° respectively. The length $L_9$ may be linked to the monotonic curvature 305 in the shroud wall 103 towards the rotor region, and it may have values between 0.25 and 0.43 times RHUB.

The distance between the inlet and the rotor region may also be chosen to be in the range 1.5 to 3 times RHUB, for a good and smooth increase of liquid flow velocity.

In some embodiments of the present invention, the distance between the shroud and the hub walls is smallest in the rotor area, in some embodiments the area being at least 8 to 10 times smaller than the inlet area. The blades may extend from the hub to the shroud, leaving just enough space to avoid contact of the blades with the shroud during operation. With reference to the dimensions of the pump, the hub radius is small compared to the tip radius. For example, the hub radius / tip radius ratio for the blade may be between 0.87 and 1, for example being at least 0.87, e.g. at least 0,9, e.g. at least 0;95, hence $R_{HUB}$ may be 0.9 $R_{TIP}$. Similar values can be provided for the stator vane, but the present invention is not limited thereto, and the hub/tip ratio may be different in the vane.

Additionally, all these values may be optimized for any desired value of head rise, pressure, flow, etc.

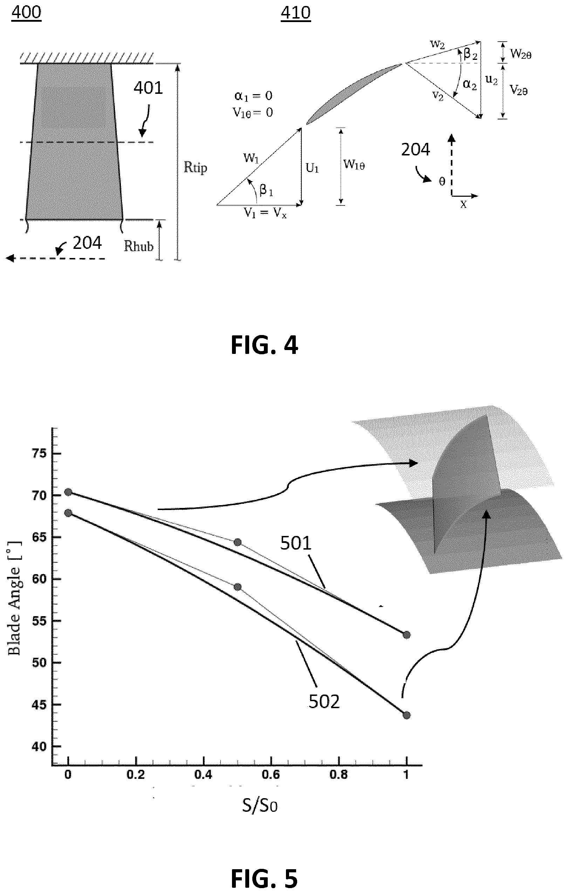

The shape of the blades may also be optimized to ensure a determined reduction of the maximum flow velocity, thus reducing the erosion risk, which is very high in case of pumps of liquid metal. For example, in some embodiments of the present invention, the rotor cross-section is defined by for example intersecting double-circular arcs. Vanes may also present characteristics similar to the rotor blades. FIG. 4 shows an exemplary rotor blade 400 and its section 410. The distance between the axis and the part of the blade closest (e.g. attached) to the hub is the $R_{HUB}$, while the distance between the axis and the foil tip is $R_{TIP}$. The section 410 of the foil 400 according to the dashed line 401 can be seen in the rightmost schematic representation of the foil section 410, together with the flow angles $\beta_1$, $\beta_2$ (beta 1 and 2) of the flow direction W with respect to the pump axis 204. In the particular case of blades, the flow (and the flow direction determined by the $\beta$ beta angles) changes along the blade due to its curved shape, hence the flow is $W_1$ at the entrance of the blade, and $W_2$ at the exit.

Moreover, the flow angles shown in the diagram 410 of FIG. 4 may change with the height ($R_{TIP} - R_{HUB}$) of the foil. The diagram in FIG. 5 shows the angle variation along the normalized length (S/So) of the camber line of, e.g., a blade. The characterizing camber angle of the blade tip 501 of the camber line may differ from the camber angle of the blade near the hub 502. For example, the angle at the flow entry may be 70° in the tip and 68° at the hub, while at the flow exit may be 55° in the tip and near 45° in the hub. This results in a twisted blade. The angles may be optimized according to desired parameters, as before.

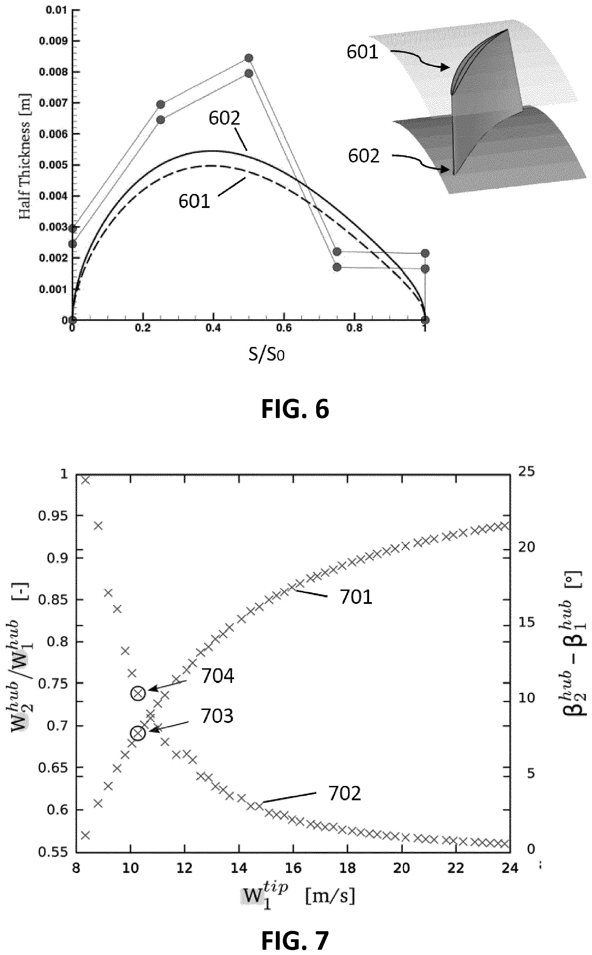

The shape of the blade surfaces may be symmetrical or asymmetrical. In some embodiments, it may be asymmetrical as shown in the diagram of FIG. 6 showing the profile of an exemplary blade with a bulge close to the flow entry side, for example at one third of the length. The thickness of the blade may also be variable along its height ($R_{BTIP} - R_{BHUB}$). For example, it may be thinner in the tip, and the profile of the tip 601 (represented by a dashed line) may have a maximum thickness of a value of 10 mm (shown is the half thickness value), for example 4.8 mm, while the thickness at the hub 602 (represented by a full line) may have a maximum thickness of a value of 10.4 mm. As indicated above, in embodiments of the present invention the thickness can be larger than the above indicated values.

An appropriate shape and thickness may not only prolong the lifetime of the blades and increase their effectivity, but also blade erosion and pitting may be reduced by a proper choice of shape and thickness.

The choice of geometry of the blade (flow angles, camber angles, thickness, etc.) has an influence on the flow at the entrance and exit of the blade. Additionally, the flow at the tip may be different from the flow at the hub. FIG. 7 shows the ratio 701 between exit flow and the entry flow in a blade , as well as the flow turning 702 in degrees between rotor inlet and outlet at the hub (= maximum turning) as function of the inlet flow speed near the tip (= maximum velocity). The selected design corresponds to a flow angle difference 703 of approximately 7° and an entry flow at the blade tip of 10.5 to 11 m/s results in a flow ratio 704 of approximately 0.74. The flow ratio of 0.74 relates to the diffusion effort of the cascade, i.e. it results in a slow down of the flow to generate head. When a low diffusion ratio is used, this results in a high peak velocity on the suction side.

As before, this type of profile may be present in blade and/or vane. Vanes may have for example a relative high thickness, to still deal with erosion if erosion would occur anyway.

The present invention is not be limited thereto, and the pump may comprise other type of foils, or mix a type of blade with a different type of vane.

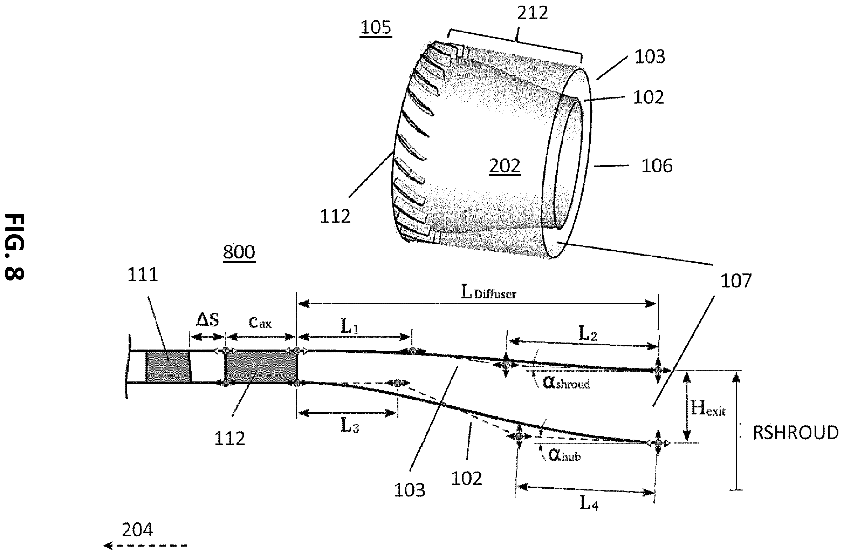

Some embodiments of a pump according to the present invention may comprise an outlet. FIG. 8 represents an isolated outlet 105 for a pump, as well as its cross section 800 (showing flow-through cascade 111 and vane ring 112), according to some embodiments of the present invention. The outlet may be defined by a wall 102 of the hub 110 and a wall 103 of the shroud, for example the wall 102 belonging to the stator 202 and the wall 103 belonging to a second piece 212 of the shroud. The exit 106 of the pump may be defined in the outlet 105. Several parameters are shown in the cross section 800, which can be optimized by design according to the desired flow, head rise, pressure, etc. while simultaneously reducing or avoiding erosion of the pump parts. With reference to FIG. 8, the outlet may comprise a diffuser 107, for reducing the kinetic energy in the flow and hence increase the pressure. The length $L_{Diffuser}$ defines the total length of the diffuser from the vane to the exit. The distance between the flow through cascade and the vane ring is $\Delta S$. The distance $L_1$ defined in the shroud from the vane ring 112 may have a value between 0.4 to 0.55 times RHUB. The vane ring helps decreasing the whirl component of the liquid, further increasing the pressure. The length $L_2$, defined from the exit 106 towards the stator, and the angle $\alpha_{SHROUD}$ (alpha shroud), may be all related to the curvature of the diffuser 107, and may have a value between 0.45 to 0.60 times RHUB for $L_2$ and 0° to 7.5° for the angle. The length $L_3$ defined in the hub from the vane ring 112 may have a value between 0.25 to 0.50 times RHUB. Together with $L_3$, the length $L_4$ defined from the exit 106 and the angle $\alpha_{HUB}$ (alpha hub) may define the curvature of the hub in the diffuser 107, and may have a value of 0.25 to 0.50 times RHUB, 0.45 to 0.60 times RHUB, and 0° to 10° respectively. The flow escapes from the pump in an area defined by $H_{EXIT}$ and $R_{SHROUD}$. For example, in the case of axially symmetrical pumps, the exit 106 will form a ring with inner and outer radii $R_{SHROUD}$ and $H_{EXIT}$.

In some embodiments of the present invention, the distance between the shroud and the hub is smallest in the rotor and it increases towards the exit (hence $R_{VTIP}$ - $R_{VHUB}$ << $H_{EXIT}$), and the walls may comprise an increasing curvature from the stator towards the exit. The curvature of the diffuser walls may be smaller in the shroud than in the hub wall. Optimization of the diffuser dimensions is also possible.

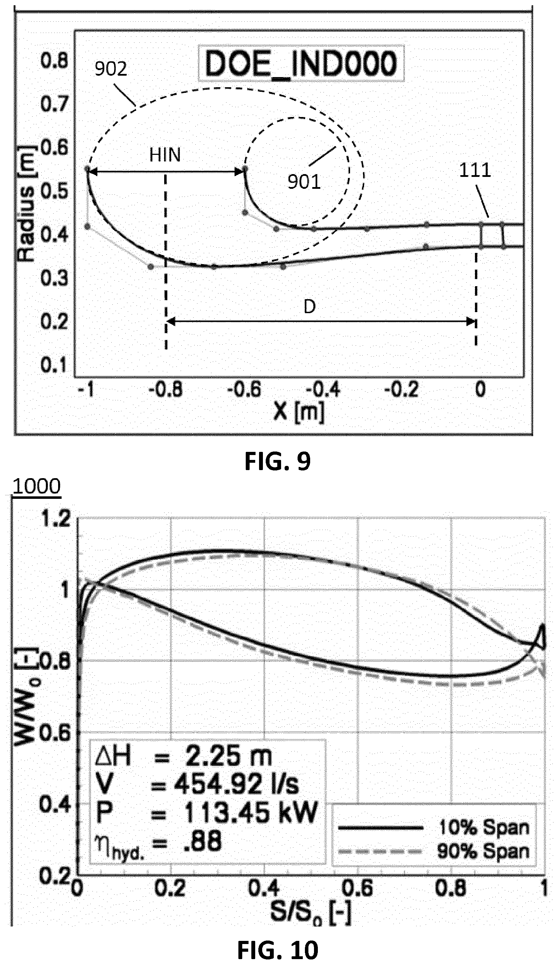

Examples of particular embodiments will be discussed in the following, illustrating the results of pump simulation experiments for optimizing pump design. An inlet for a pump according to an exemplary embodiment of the present invention may comprise a shroud and a hub with bell-shaped walls, and may be concentric with respect to a common pump axis. The inlet entrance area may be defined by the curvature of the edge of each wall. The particular geometry and dimensions of the inlet, outlet and foils may be optimized according to, for instance, the maximum flow expected, the maximum head rise, the desired flow, the desired angular speed, etc. The outline of the cross section of an inlet is shown in FIG. 9 as the radius (distance from the axis) of the walls as a function of the axis length. The size $H_{IN}$ of the inlet entrance 104 may be, in this exemplary embodiment of the present invention, 40 cm, while the distance between the walls at the flow through cascade 111 may be 5 cm or less. In order to reduce cavitation, the flow of the liquid metal into the rotor area may be done smoothly, avoiding corners. For example, the shroud and hub walls may be curved. The shroud rim may have a curvature 901 (shown as a dashed circle) of a 10 cm radius, and the hub rim may be defined by one quadrant of a dashed ellipse 902 of 40 cm semi-major axis and 30 cm semi-minor axis. The present invention may not be limited to said shapes and dimensions, and the rim may be parabolic or have an irregular curvature. The distance D between the center of the inlet entrance and the flow-through cascade 111 may be 80 cm. These geometric characteristics help in reducing erosion and damages, as well as increasing flow. For example, one of the parameters determining the maximum relative velocity (which in embodiments of the present invention may be 11 m/s) is the distance D.

It has also been found that, for embodiments of the present invention with such geometric characteristics, the optimal rotor hub radius should be only slightly smaller than the foil tip radius in order to obtain good flow, obtaining low cavitation and increasing head rise. For instance, $R_{HUB}$ = 0.9 $R_{TIP}$. It may have other values depending on the particular application.

The camber line angle (blade angle) may also be optimized. In one exemplary embodiment in which the pump comprises 27 blades, the blade angle would change from 67 to 45 degrees in the hub and from 72 to 54 degrees in the shroud. The maximum flow (W/Wo) is indicated in the graph 1000 of FIG. 10, corresponding to a head rise of 2.25 m, 454.92 liters per second, 113.45 kW of power and efficiency (ratio of real vs ideal head rise) of 0.88.

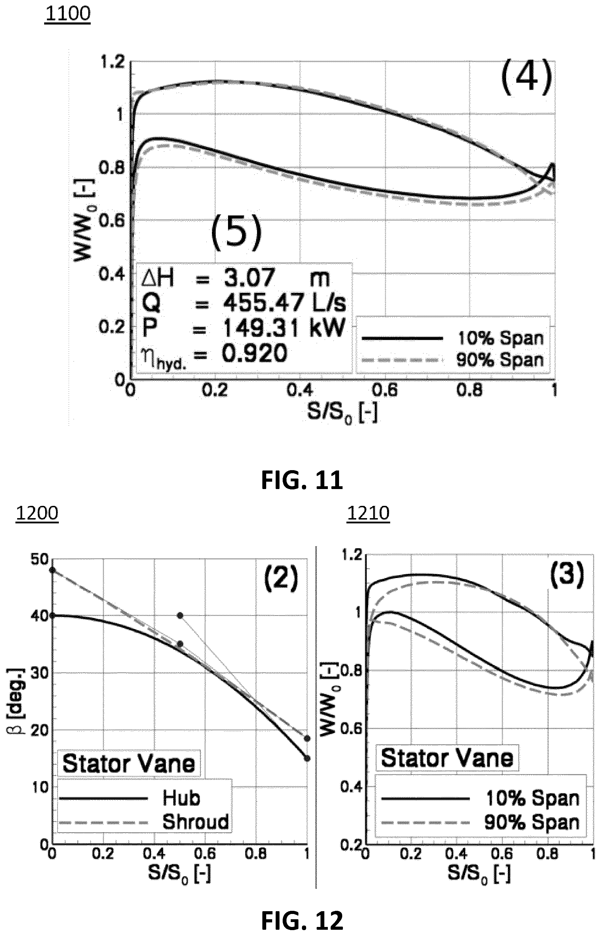

For a flow through cascade comprising 24 blades, on the other hand, the optimal camber line angle would have 65 to 40 degrees in the hub and 67 to 50 degrees in the shroud. The maximum flow is reduced as indicated in the graph 1100 of FIG. 11, corresponding to a head rise of 3.07 m, 455.47 liters per second, 149.31 kW of power and efficiency of 0.92.

In embodiments of the present invention comprising a vane ring, the same can be applied to vane design. As it can be seen in FIG. 12, for embodiments comprising 25 vanes, the optimal camber line angle should be between 40 and 15 degrees in the hub and 49 and 19 degrees in the shroud as shown in the graph 1200 on the right of FIG. 12. Nevertheless also designs having a different outlet angle, e.g. an outlet angle equal to 0, also are envisaged in embodiments of the present invention. The graph 1210 on the left of FIG. 12 corresponds to the reduction of maximum flow for the optimized values. It corresponds to a head rise of 2.98 m, 454.66 liters per second, 142.57 kW. The speed of discharge is 1.89 m/s. It is to be noticed that the above values are obtained for an optimized geometry. More particularly, the Hub/tip radius ratio is 0.88, rtip was 0.45m and the rotational speed was 223.67 rpm.

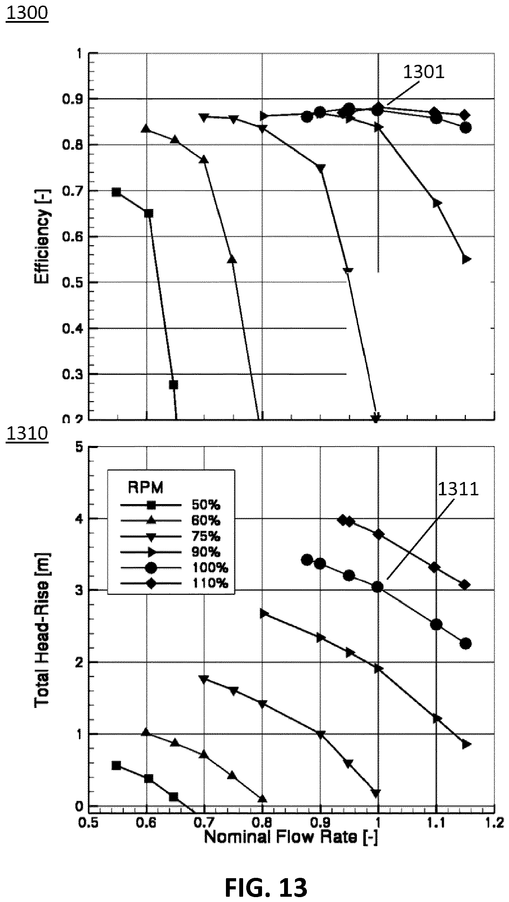

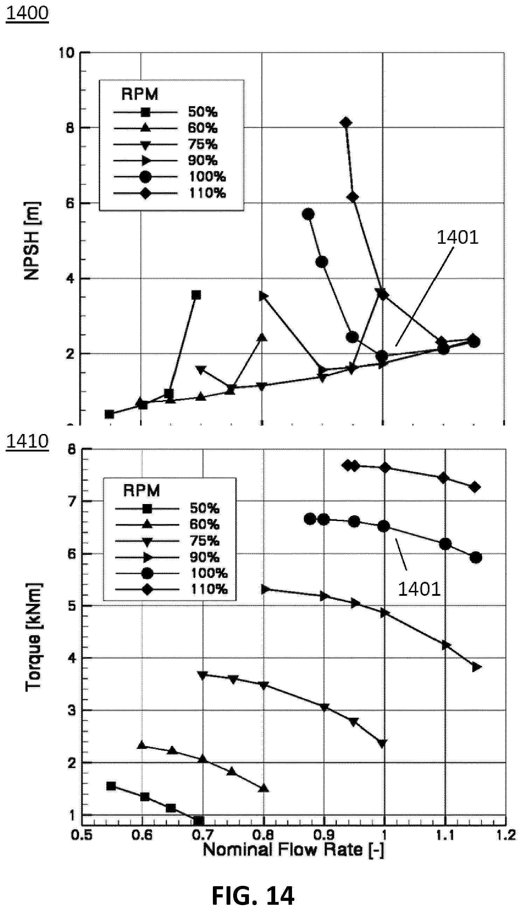

The corresponding pump characteristics of the optimized pump can be seen in the diagrams of FIG. 13 and FIG. 14.

The diagram 1300 of FIG. 13 shows the efficiency with respect to the nominal flow rate, while the diagram 1310 of FIG. 13 shows the total head rise, for several regimes of angular speeds with respect to the maximum speed (from 50% to 110% of the maximum speed, in RPM). The chosen design efficiency, at maximum speed (100%), gives an efficiency 1301 close to 0.9 and a total head rise 1311 of slightly more than 3 m, for a nominal flow rate of 1.

Analogously, the diagram 1400 of FIG. 14 shows the net positive suction head required (NPSH, minimum pressure required at the suction port of a pump for avoiding cavitation) with respect to the nominal flow rate, while the diagram 1410 of FIG. 14 shows the total torque, for the same regimes of angular speeds as in FIG. 13. The chosen design efficiency, at maximum speed (100%), gives an NPSH 1401 of 2 m and a torque 1411 of slightly more than 6500 Nm, for a nominal flow rate of 1.

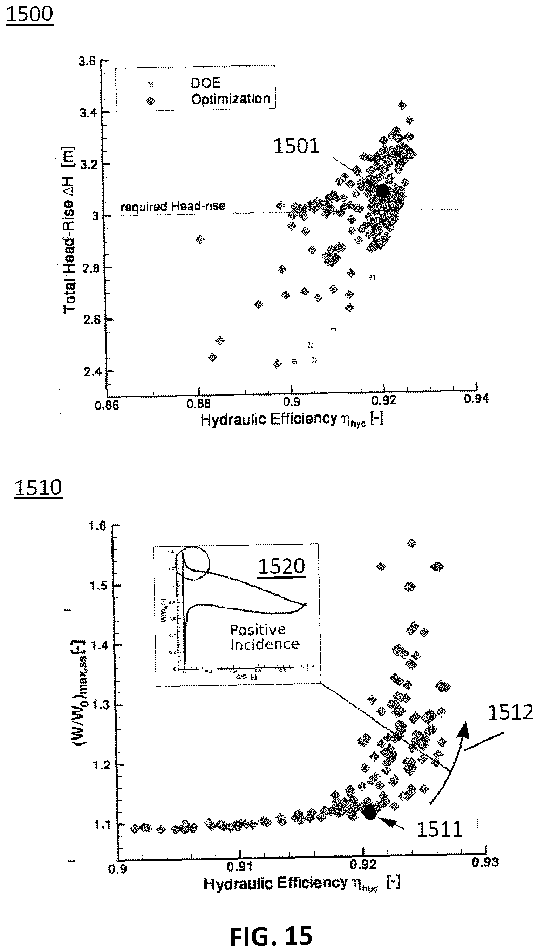

An example of design optimization is seen in FIG. 15, showing two graphs illustrating the optimization values of total head rise with respect to the hydraulic efficiency. While the highest hydraulic efficiency and a high head rise may be desirable, the optimization of the experimental design shows that maximum flow increases dramatically for efficiencies over 0.92, following the arrow 1512. The sub-diagram 1520 shows the unacceptable increase of the maximum flow for such high efficiencies, increasing erosion risk.

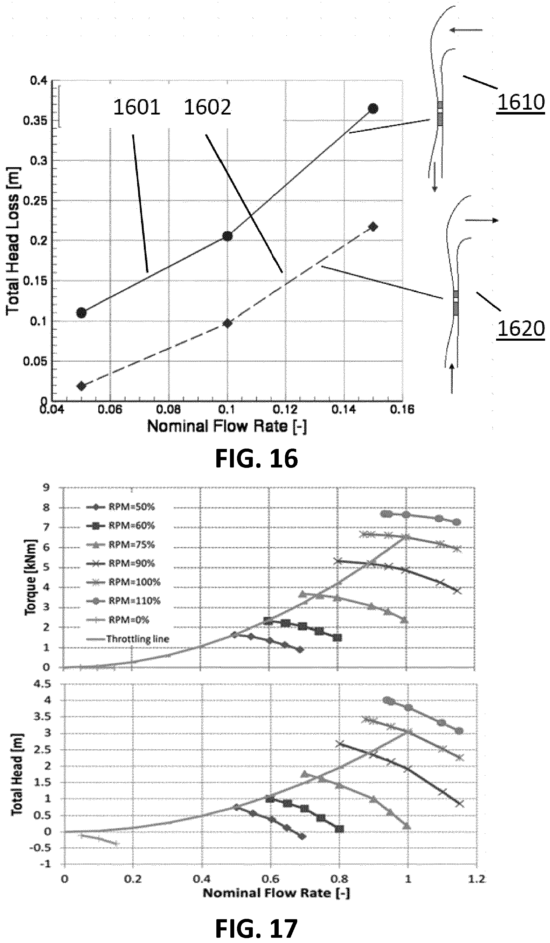

The total head loss can be obtained with the rotor stopped (zero RPM), as a function of the nominal flow rate. This is shown in FIG. 16 for a pump according to some embodiments of the present invention. In the figure, the flow direction is indicated by arrows in the cross sections 1610, 1620: the forward flow direction 1601, in which liquid enters the pump through the inlet and exits through the outlet, and reverse flow direction 1602, in which liquid enters the pump through the outlet and exits through the inlet. The present invention reduces the dynamic head loss by reducing the number of corners and elbows in the pipe system, as well as providing a symmetrical flow.

The pump shutdown time of a pump according to embodiments of the present invention can be calculated according to Nourbakhsh, A., Joumotte, A., Hirsch, Ch., Parizi, H.B. "Turbopumps and Pumping Systems", Springer, 2008:

$$t_{SHUT} = \frac{\pi J}{30} \sum \frac{\Delta n_i}{T_i}$$

Assuming a parabolic throttle line, and assuming friction forces and inertia of the LBE and walls are negligible, the torques for different angular speed regimes (0-110%) are shown in FIG. 17 (upper diagram), together with the total head (lower diagram) as a function of the nominal flow rate for a parabolic throttle line. These values (except for the value at 110% RPM) are also shown in the Table 1.

Table 1. Torque for different RPM regimes

| i | n[%] | n[1/min] | $\Delta n$ | Torque T [Nm] |
|---|------|----------|-----------|---------------|
| 0 | 0 |  |  |  |
| 1 | 50% | 111.8 | 111.8 | 1630 |
| 2 | 60% | 134.2 | 22.4 | 2344 |
| 3 | 75% | 167.8 | 33.6 | 3670 |
| 4 | 90% | 201.3 | 33.5 | 5280 |
| 5 | 100% | 223.67 | 22.4 | 6521 |

For the values of Table 1 of speed regimes and torque, the shutdown time has been calculated for three different moments of inertia, as shown in Table 2.

Table 2. Shutdown time in seconds

| Moment of Inertia J [Kg m²] | Shutdown time t [s] |
|---|---|
| 600 | 6.1 |
| 1600 | 16.3 |
| 2600 | 26.4 |

The knowledge and control of the shutdown time of a pump may be a critical parameter in nuclear applications. The pump according to embodiments of the present invention, thanks to optimization, allows a high level of control over its parameters and characteristics, which are oriented to the minimization of cavitation, erosion, etc of the pump.

However, mechanical stresses play a particularly important role in the continuous performance of pumps. In particular embodiments of the present invention, a blade at 60% of its thickness may sustain von Mises stresses of 50-60 MPa on the suction side, due to centrifugal forces at 223.67 RPM and pressure loading. At 100% of blade thickness, the von Mises stresses may be 20-40 MPa. Due to these high mechanical stresses, in some embodiments of the present invention, the flow through cascade may advantageously comprise blades comprising stainless steel, for example 316L stainless steel of a Young modulus of at least 190 GPa and yield strength of at least 290 MPa. Vanes may comprise the same materials. Steel is particularly advantageous because of its versatility and inexpensive production, but other types of material, such different alloys or even ceramics, may be within the scope of the present invention. Blades/Vanes may be attached onto the rotor and the stator individually, for example by fitting a root of a blade or vane in a slot and soldering. Other techniques for attaching the blades/vanes to the rotor/stator may be suitable, or alternatively the blades/vanes may be integrally machined.

Other added elements and features, such as pre-vanes, may be within the scope of the present invention.

In a further aspect, the present invention also relates to a nuclear reactor comprising a pump as described in the first aspect. Furthermore, the present invention also relates to the use of a pump as described in the first aspect, for pumping lead-bismuth eutectic mixtures in a nuclear reactor.

## Claims

1. An axial pump (100) for pumping liquid metal, the axial pump comprising

   - an inlet (101) for receiving liquid,
   - at least one rotor (201), the rotor (201) comprising a rotor hub (110) and a plurality of rotor blades (400) positioned thereon,
   - a stator, comprising a stator hub and a plurality of stator vanes, and
   - an outlet for discharging the liquid metal,
   - **characterised in that**

      the inlet (101) is defined by two axially concentric walls, the concentric walls having curved edges such that the inlet walls define an inlet entrance area which normal vector is substantially perpendicular to the axis of the axial pump, and **in that**
      the rotor blades (400) have a tip being positioned closest to the wall opposing the rotor (201) and whereby the ratio of the distance between the rotor axis and the rotor hub, being the rotor hub radius, to the distance between the rotor axis and the rotor blade tip, being the rotor tip radius, is larger than 0.87.

2. An axial pump (100) according to claim 1, wherein said axial pump (100) is adapted for pumping lead-bismuth eutectic mixtures.

3. An axial pump (100) according to any of the previous claims wherein the inlet area of the pump (100) is between 8.5 and 10.8 times larger than the area in front of the rotor (201).

4. An axial pump (100) according to any of the previous claims, wherein the longitudinal section of the walls comprises a monotonically decreasing curvature from the entrance of the inlet, the curvature being defined with respect to the axis of the pump (100).

5. An axial pump (100) according to any of the previous claims, wherein the length of the portion of the inlet before the rotor has a radius of curvature larger than 0.5 and is at least 1 meter long and/or whereby the ratio of the distance between the rotor axis and the rotor hub, being the rotor hub radius, to the distance between the rotor axis and the rotor blade tip, being the rotor tip radius, is larger than 0.9, for example larger than 0.95.

6. An axial pump (100) according to any of the previous claims, wherein the rotor (201) comprises at least 20 blades, advantageously at least 23 blades.

7. An axial pump (100) according to any of the previous claims, wherein the rotor blades (400) comprising stainless steel and/or wherein the maximum rotor blade thickness is 11mm at the hub and 10mm in the tip and/or wherein the rotor blades have a varying angle with respect to the axis of the pump, for different positions along a blade camber line of the rotor blade.

8. An axial pump (100) according to the previous claim, wherein the rotor blades (400) have a varying angle with respect to the axis of the pump, for different positions along a blade camber line of the rotor blade and wherein the variation in the angle with respect to the axis of the pump is different for camber lines near the tip of the rotor blade (400) compared to camber lines near the hub.

9. An axial pump (100) according to any of the previous claims, wherein a cross section of the rotor blades (400) is defined by intersecting double circular arcs or wherein a cross section of the rotor blades is defined by intersecting asymmetric double circular arcs.

10. An axial pump (100) according to the previous claim, wherein the outlet further comprises a diffuser (107), the diffuser (107) having a length in between 1.39 and 1.64 times $R_{HUB}$.

11. An axial pump (100) as in any of the previous claims, wherein the stator comprises at least one row of vanes (112).

12. An axial pump (100) according to the previous claim, wherein at least one row of vanes comprises at least 25 axial vanes and/or wherein the vanes comprise a varying angle with respect to the axis of the pump along the vane camber line and or wherein the stator vane maximum thickness is between 10mm and 11mm.

**13.** A nuclear reactor cooled using a liquid coolant for cooling, the cooling system comprising an axial pump (100) for pumping the liquid metal coolant according to any of claims 1 to 12.

**14.** A nuclear reactor according to claim 13, wherein the liquid coolant is a liquid metal coolant or wherein the liquid coolant is a lead-bismuth eutectic mixture.

**15.** Use of an axial pump (100) according to claim 1 for pumping lead-bismuth eutectic mixtures for cooling of a nuclear reactor.


**Patentansprüche**

**1.** Eine Axialpumpe (100) zum Pumpen von flüssigem Metall, wobei die Axialpumpe umfasst

> - einen Einlass (101) zum Aufnehmen von Flüssigkeit,
> - mindestens einen Rotor (201), wobei der Rotor (201) eine Rotornabe (110) und eine Vielzahl von darauf positionierten Rotorblättern (400) umfasst,
> - einen Stator, umfassend eine Statornabe und eine Vielzahl von Statorschaufeln, und
> - einen Auslass zum Ablassen des flüssigen Metalls,
> - **dadurch gekennzeichnet, dass** der Einlass (101) durch zwei axial konzentrische Wände definiert ist, wobei die konzentrischen Wände gekrümmte Ränder aufweisen, sodass die Einlasswände einen Einlasseingangsbereich definieren, dessen Normalvektor im Wesentlichen senkrecht zu der Achse der Axialpumpe ist, und dadurch, dass die Rotorblätter (400) eine Spitze aufweisen, die am nächsten zu der Wand positioniert sind, die dem Rotor (201) gegenüberliegt, und wobei das Verhältnis des Abstands zwischen der Rotorachse und der Rotornabe, der der Rotornabenradius ist, zu dem Abstand zwischen der Rotorachse und der Rotorblattspitze, der der Rotorspitzenradius ist, größer als 0,87 ist.

**2.** - Eine Axialpumpe (100) nach Anspruch 1, wobei die Axialpumpe (100) zum Pumpen von eutektischen Blei-Bismut-Mischungen angepasst ist.

**3.** - Eine Axialpumpe (100) nach einem der vorstehenden Ansprüche, wobei der Einlassbereich der Pumpe (100) zwischen 8,5- und 10,8-mal größer ist als der Bereich vor dem Rotor (201).

**4.** - Eine Axialpumpe (100) nach einem der vorstehenden Ansprüche, wobei die längsgerichtete Sektion der Wände ab dem Eingang des Einlasses eine monoton abnehmende Krümmung umfassen, wobei die Krümmung bezüglich der Achse der Pumpe (100) definiert ist.

**5.** - Eine Axialpumpe (100) nach einem der vorstehenden Ansprüche, wobei die Länge des Abschnitts des Einlasses vor dem Rotor einen Krümmungsradius größer als 0,5 aufweist und mindestens 1 Meter lang ist, und/oder wobei das Verhältnis des Abstands zwischen der Rotorachse und der Rotornabe, der der Rotornabenradius ist, zu dem Abstand zwischen der Rotorachse und der Rotorblattspitze, der der Rotorspitzenradius ist, größer als 0,9 ist, zum Beispiel größer als 0,95.

**6.** - Eine Axialpumpe (100) nach einem der vorstehenden Ansprüche, wobei der Rotor (201) mindestens 20 Blätter, vorteilhafterweise mindestens 23 Blätter, umfasst.

**7.** - Eine Axialpumpe (100) nach einem der vorstehenden Ansprüche, wobei die Rotorblätter (400) Edelstahl umfassen und/oder wobei die maximale Rotorblattdicke an der Nabe 11 mm und an der Spitze 10 mm beträgt, und/oder wobei die Rotorblätter für unterschiedliche Positionen entlang einer Blattskelettlinie des Rotorblatts bezüglich der Achse der Pumpe einen variierenden Winkel aufweisen.

**8.** - Eine Axialpumpe (100) nach dem vorstehenden Anspruch, wobei die Rotorblätter (400) für unterschiedliche Positionen entlang einer Blattskelettlinie des Rotorblatts bezüglich der Achse der Pumpe einen variierenden Winkel aufweisen und wobei die Variation bei dem Winkel bezüglich der Achse der Pumpe für Skelettlinien nahe der Spitze des Rotorblatts (400) verglichen mit Skelettlinien nahe der Nabe unterschiedlich ist.

**9.** - Eine Axialpumpe (100) nach einem der vorstehenden Ansprüche, wobei ein Querschnitt der Rotorblätter (400) durch sich schneidende, doppelt kreisförmige Bögen definiert ist oder wobei ein Querschnitt der Rotorblätter durch sich schneidende, asymmetrische doppelt kreisförmige Bögen definiert ist.

**10.** - Eine Axialpumpe (100) nach dem vorstehenden Anspruch, wobei der Auslass weiter einen Diffusor (107) umfasst, wobei der Diffusor (107) eine Länge zwischen 1,39- und 1,64-mal RHUB aufweist.

**11.** - Eine Axialpumpe (100) nach einem der vorstehenden Ansprüche, wobei der Stator mindestens eine Reihe von Schaufeln (112) umfasst.

**12.** - Eine Axialpumpe (100) nach dem vorstehenden Anspruch, wobei mindestens eine Schaufelreihe mindestens 25 axiale Schaufeln umfasst und/oder wobei die Schaufeln bezüglich der Achse der Pumpe entlang der Schaufelskelettlinie einen variierenden Winkel umfassen und oder wobei die maximale Dicke der Statorschaufel zwischen 10 mm und 11 mm beträgt.

**13.** - Ein Kernreaktor, gekühlt unter Verwendung eines flüssigen Kühlmittels, wobei das Kühlungssystem eine Axialpumpe (100) zum Pumpen des flüssigen Metallkühlmittels nach einem der Ansprüche 1 bis 12 umfasst.

**14.** - Ein Kernreaktor nach Anspruch 13,
wobei das flüssige Kühlmittel ein flüssiges Metallkühlmittel ist oder wobei das flüssige Kühlmittel eine eutektische Blei-Bismut-Mischung ist.

**15.** - Verwendung einer Axialpumpe (100) nach Anspruch 1 zum Pumpen von eutektischen Blei-Bismut-Mischungen zum Kühlen eines Kernreaktors.

**Revendications**

**1.** Pompe axiale (100) pour pomper du métal liquide, la pompe axiale comprenant

- une admission (101) pour recevoir du liquide,
- au moins un rotor (201), le rotor (201) comprenant un moyeu de rotor (110) et une pluralité de pales de rotor (400) positionnées sur celui-ci,
- un stator, comprenant un moyeu de stator et une pluralité d'aubes de stator, et
- une sortie pour évacuer le métal liquide,
- **caractérisée en ce que** l'admission (101) est définie par deux parois axialement concentriques, les parois concentriques présentant des bords incurvés de sorte que les parois d'admission définissent une zone d'entrée d'admission dont le vecteur normal est sensiblement perpendiculaire à l'axe de la pompe axiale, et **en ce que** les pales de rotor (400) présentent une pointe étant positionnée le plus près de la paroi opposée au rotor (201) et selon laquelle le rapport entre la distance entre l'axe de rotor et le moyeu de rotor, étant le rayon de moyeu de rotor, et la distance entre l'axe de rotor et la pointe de pale de rotor, étant le rayon de pointe de rotor, est supérieur à 0,87.

**2.** Pompe axiale (100) selon la revendication 1, dans laquelle ladite pompe axiale (100) est adaptée pour pomper des mélanges eutectiques plomb-bismuth.

**3.** Pompe axiale (100) selon l'une quelconque des revendications précédentes, dans laquelle la zone d'admission de la pompe (100) est entre 8,5 et 10,8 fois plus grande que la zone devant le rotor (201).

**4.** Pompe axiale (100) selon l'une quelconque des revendications précédentes, dans laquelle la section longitudinale des parois comprenant une courbure décroissante de manière monotone depuis l'entrée de l'admission, la courbure étant définie par rapport à l'axe de la pompe (100).

**5.** Pompe axiale (100) selon l'une quelconque des revendications précédentes, dans laquelle la longueur de la portion de l'admission avant le rotor présente un rayon de courbure supérieur à 0,5 et fait au moins 1 mètre de long et/ou selon laquelle le rapport entre la distance entre l'axe de rotor et le moyeu de rotor, étant le rayon de moyeu de rotor, et la distance entre l'axe de rotor et la pointe de pale de rotor, étant le rayon de pointe de rotor, est supérieur à 0,9, par exemple supérieur à 0,95.

**6.** Pompe axiale (100) selon l'une quelconque des revendications précédentes, dans laquelle le rotor (201) comprend au moins 20 pales, avantageusement au moins 23 pales.

**7.** Pompe axiale (100) selon l'une quelconque des revendications précédentes, dans laquelle les pales de rotor (400) comprennent de l'acier inoxydable et/ou dans laquelle l'épaisseur de pale de rotor maximale est 11 mm au niveau du moyeu et 10 mm au niveau de la pointe et/ou dans laquelle les pales de rotor présentent un angle variable par rapport à l'axe de la pompe, pour des positions différentes le long d'une ligne de cambrure de pale de la pale de rotor.

**8.** Pompe axiale (100) selon la revendication précédente, dans laquelle les pales de rotor (400) présentent un angle variable par rapport à l'axe de la pompe, pour des positions différentes le long d'une ligne de cambrure de pale de la pale de rotor et dans laquelle la variation dans l'angle par rapport à l'axe de la pompe est différente de lignes de cambrure près de la pointe de la pale de rotor (400) en comparaison avec des lignes de cambrure près du moyeu.

**9.** Pompe axiale (100) selon l'une quelconque des revendications précédentes, dans laquelle une section transversale des pales de rotor (400) est définie en croisant des doubles arcs circulaires ou dans laquelle une section transversale des pales de rotor est définie en croisant des doubles arcs circulaires asymétriques.

**10.** Pompe axiale (100) selon la revendication précédente, dans laquelle la sortie comprend en outre un diffuseur (107), le diffuseur (107) présentant une longueur entre 1,39 et 1,64 fois RHUB.

11. Pompe axiale (100) selon l'une quelconque des revendications précédentes, dans laquelle le stator comprend au moins un rangée d'aubes (112).

12. Pompe axiale (100) selon la revendication précédente, dans laquelle au moins une rangée d'aubes comprend au moins 25 aubes axiales et/ou dans laquelle les aubes comprennent un angle variable par rapport à l'axe de la pompe le long de la ligne de cambrure d'aube et/ou dans laquelle l'épaisseur maximale d'aube de stator est entre 10 mm et 11 mm.

13. Réacteur nucléaire refroidi en utilisant un liquide de refroidissement pour refroidir, le système de refroidissement comprenant une pompe axiale (100) pour pomper le liquide de refroidissement de métal liquide selon l'une quelconque des revendications 1 à 12.

14. Réacteur nucléaire selon la revendication 13, dans lequel le liquide de refroidissement est un liquide de refroidissement de métal liquide ou dans lequel le liquide de refroidissement est un mélange eutectique plomb-bismuth.

15. Utilisation d'une pompe axiale (100) selon la revendication 1 pour pomper des mélanges eutectiques plomb-bismuth pour le refroidissement d'un réacteur nucléaire.

EP 3 402 990 B1

**FIG. 1**

**FIG. 2**

13

FIG. 3

**FIG. 4**

**FIG. 5**

**FIG. 6**

**FIG. 7**

**FIG. 8**

**FIG. 9**

**FIG. 10**

EP 3 402 990 B1

1100

**FIG. 11**

1200

1210

**FIG. 12**

19

FIG. 13

FIG. 14

1500

1510

**FIG. 15**

**FIG. 16**

**FIG. 17**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2990779 A
- JP 7127593 A
- GB 268037 A
- EP 1103724 A2
- EP 3223285 A1

**Non-patent literature cited in the description**

- **NOURBAKHSH, A. ; JOUMOTTE, A. ; HIRSCH, CH. ; PARIZI, H.B.** Turbopumps and Pumping Systems. Springer, 2008